# EUROPEAN PATENT APPLICATION

(11) **EP 2 194 735 A1**
(43) Date of publication of application: **09.06.2010**
(21) Application number: 08832930.5
(22) Date of filing: 26.09.2008
(51) Int. Cl.: H04W 4/00, H04B 7/06, H04W 88/02

(54) **BASE STATION DEVICE, USER DEVICE, AND COMMUNICATION CONTROL METHOD**

(30) Priority: 27.09.2007 JP 2007252474
(71) Applicant: NTT DoCoMo, Inc., Chiyoda-ku Tokyo 100-6150 (JP)
(72) Inventor: SAWAHASHI, Mamoru, Tokyo 100-6150 (JP); KAWAI, Hiroyuki, Tokyo 100-6150 (JP)
(74) Representative: HOFFMANN EITLE
(86) International application number: PCT/JP2008/067526
(87) International publication number: WO 2009/041638

(57) **Abstract**

The user apparatus is provided with a plurality of antennas, and transmits a reference signal in the uplink by switching the plurality of antennas. The plurality of antennas are associated with subframes transmitted in the uplink. The base station apparatus in a radio communication system to which transmission diversity is applied in the uplink includes: a reception level storing unit configured to store a measured reception level of the reference signal for each antenna of each user apparatus; and a scheduler configured to perform, based on the reception level of the reference signal transmitted for each antenna of each user apparatus stored in the reception level storing unit, scheduling for determining a user apparatus to be assigned to a subframe associated with the antenna.

## Description

### TECHNICAL FIELD

The present invention relates to a technical field of mobile communications. More particularly, the present invention relates to a base station apparatus, a user apparatus and a method in a mobile communication system for performing antenna switching transmission diversity (ASTD).

### BACKGROUND WART

3GPP that is a standardization group of W-CDMA is studying a communication scheme that becomes a successor to W-CDMA and HSDPA, that is, 3GPP is studying Long Term Evolution (LTE). As radio access schemes, OFDM (Orthogonal Frequency Division Multiplexing) is being studied for downlink, and SC-FDMA (Single-Carrier Frequency Division Multiple Access) is being studied for uplink (refer to 3GPP TR 25.814 (V7.1.0), "Physical Layer Aspects for Evolved UTRA," September 2006, for example).

OFDM is a scheme for dividing a frequency band into a plurality of narrow frequency bands (subcarriers) so as to perform transmission by carrying data on each subcarrier. By arranging the subcarriers on frequencies densely without interfering with each other while a part of them overlap, high speed transmission is realized so that efficiency of use of frequency increases.

SC-FDMA is a transmission scheme that can decrease interference among terminals by dividing frequency band and performing transmission using frequency bands that are different among a plurality of terminals. Since the SC-FDMA has characteristics that variation of transmission power becomes small, low power consumption in the terminal and wide coverage can be realized.

In addition, in the LTE system, it is considered to apply transmission diversity. The transmission diversity is effective for realizing high throughput and high coverage for a user apparatus (UE: User Equipment) of high capacity located at a cell edge.

However, in the LTE system, from the viewpoint of implementation problem, it is not essential that the user apparatus has a plurality of RF circuits. Therefore, for performing transmission diversity in the uplink, that is, for performing transmission diversity from the user apparatus to the base station apparatus, a technique is necessary for realizing transmission diversity by using a single RF circuit. In the future, there is a possibility that a system developed from the LTE system is provided with a plurality of RF circuits. But, due to the implementation problem, there is a possibility that RF circuits the number of which is less than the number of transmission antennas are provided. Therefore, a technique is required for realizing transmission diversity using the implemented number of RF circuits.

For example, TSTD (Time Switched Transmit Diversity) is known as a technique for transmitting signals on the uplink alternately from a plurality of transmission antennas by switching between transmission antennas every predetermined time. TSTD is effective for a channel for which scheduling is not applied, which is a random access channel (RACH), for example.

Also, Closed Loop(CL)-based antenna switching transmit diversity (ASTD) is known as a technique for determining an antenna for transmission by using feedback. The closed loop-based antenna switching transmit diversity method is effective for a channel to which scheduling is applied.

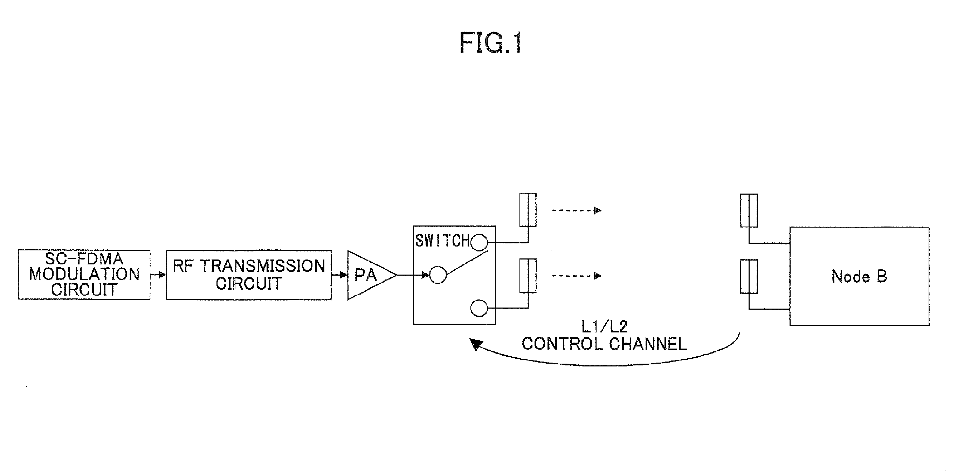

Fig. 1 shows a case in which the closed loop-based antenna switching transmit diversity is applied to the uplink. First, quality of channel state is measured for each transmission antenna based on a reference signal (CQI measurement pilot signal) transmitted from each transmission antenna. Then, a transmission antenna with good channel state is determined. Then, the determination result is fed back to a transmission source as antenna selection information. For example, the antenna selection information can be fed back to the transmission source by adding information to a control signal called uplink scheduling grant for reporting uplink scheduling assignment.

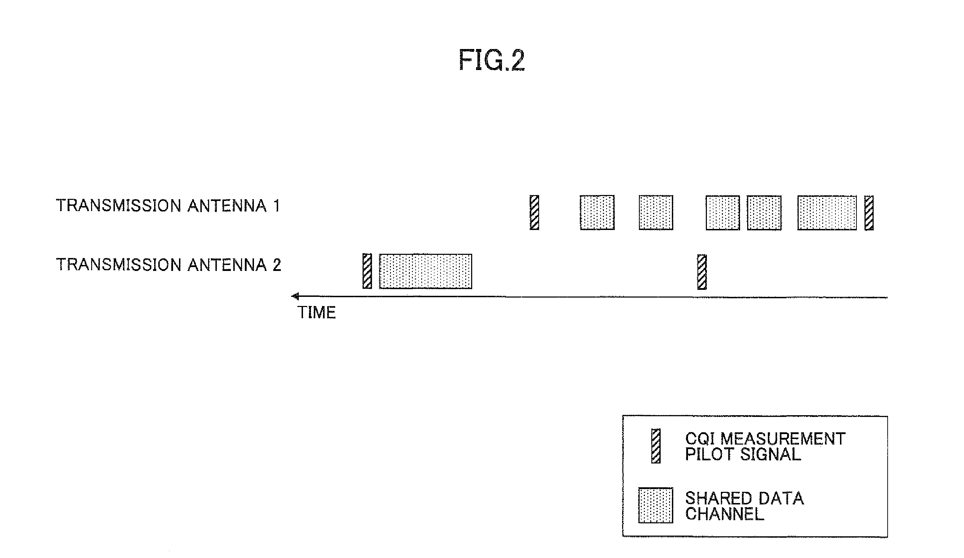

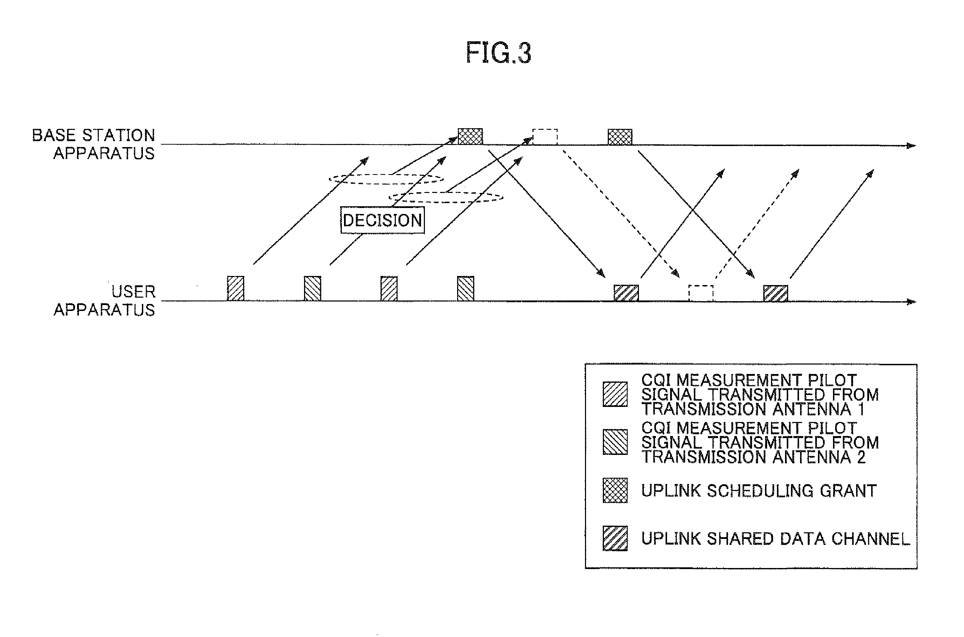

Fig. 2 schematically shows a case in which a reference signal and a data signal are transmitted from each transmission antenna in the case when the user apparatus is provided with two transmission antennas. The data signal is transmitted from a transmission antenna corresponding to a good channel state. As shown in Fig. 3, the base station apparatus (eNB: eNodeB) measures reception quality (CQI, for example) of the reference signal transmitted from each antenna, so that an antenna for transmission is selected based on the measured reception quality of the reference signal, and the result is fed back to the user apparatus using an antenna selection command (refer to 3GPP R1-070097, "Performance Evaluation of Closed Loop-Based ANTENNA Switching Transmit Diversity in E-UTRA Uplink," January, 2007, for example). By the way, although Fig. 2 shows an example in which reference signals are transmitted at different times from a plurality of transmission antennas (that is, the reference signals are transmitted in a time division multiplexing manner), code multiplexing may be performed by applying spreading (cyclic shift and the like) by using different spreading sequences at the same time. By multiplexing the reference signals of a plurality of transmission antennas by the code multiplexing, transmission intervals for transmitting the reference signal by the transmission antennas can be decreased (shortened), so that capability for following time variation can be improved.

In addition, Open Loop (OL)-based antenna switching transmit diversity (ASTD) is known as a technique for determining an antenna for transmission without using feedback.

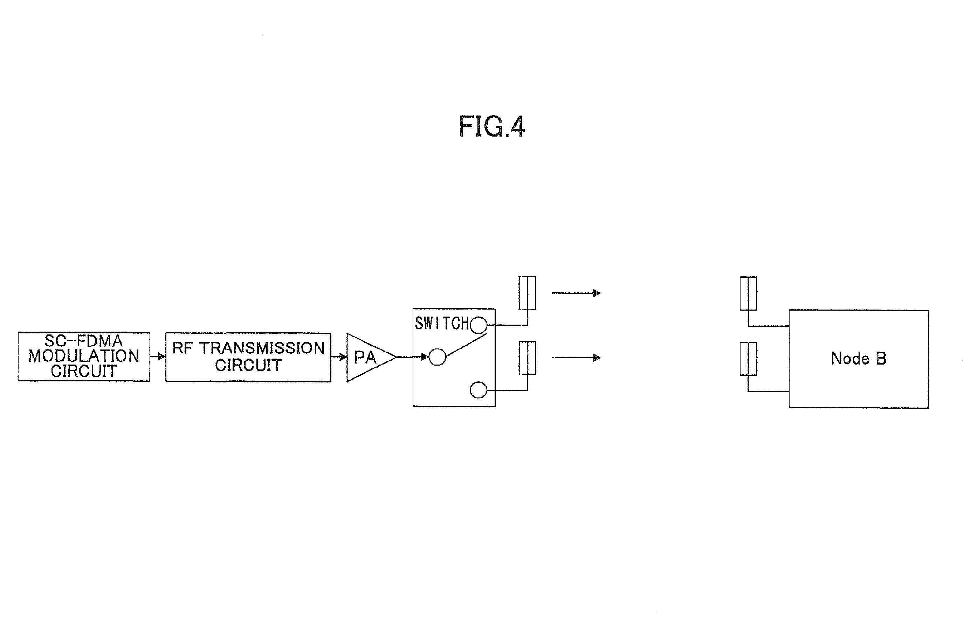

Fig. 4 shows a case in which the open Loop-based antenna switching transmit diversity is applied to the uplink. In the open loop-based antenna switching transmit diversity, each transmission antenna is selected evenly based on a predetermined pattern (or, at random) without using feedback information. Therefore, although downlink feedback is unnecessary, the effect of antenna switching diversity is not optimal, and the effect is smaller than that of the closed loop-based antenna switching transmit diversity.

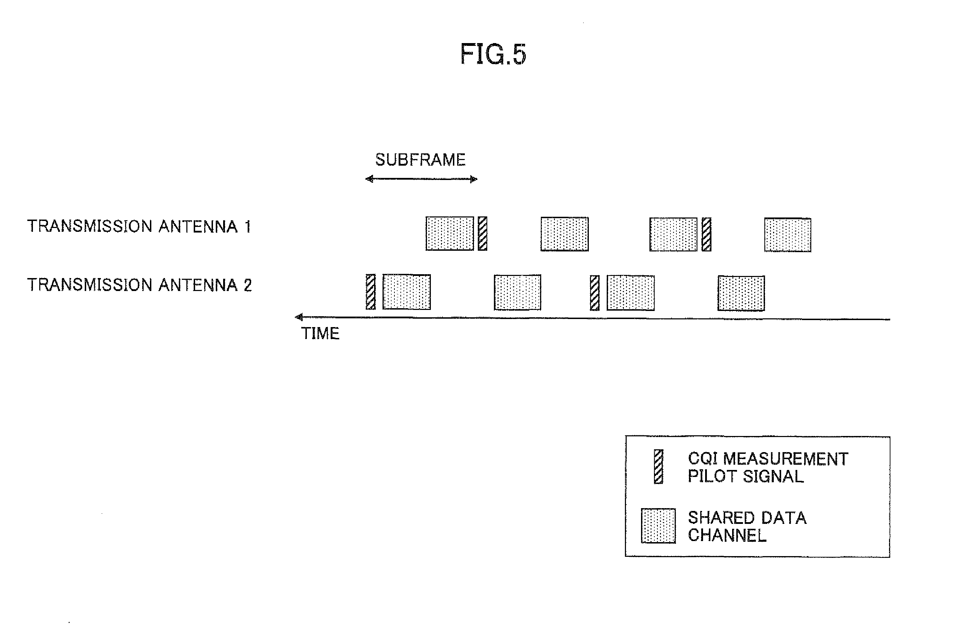

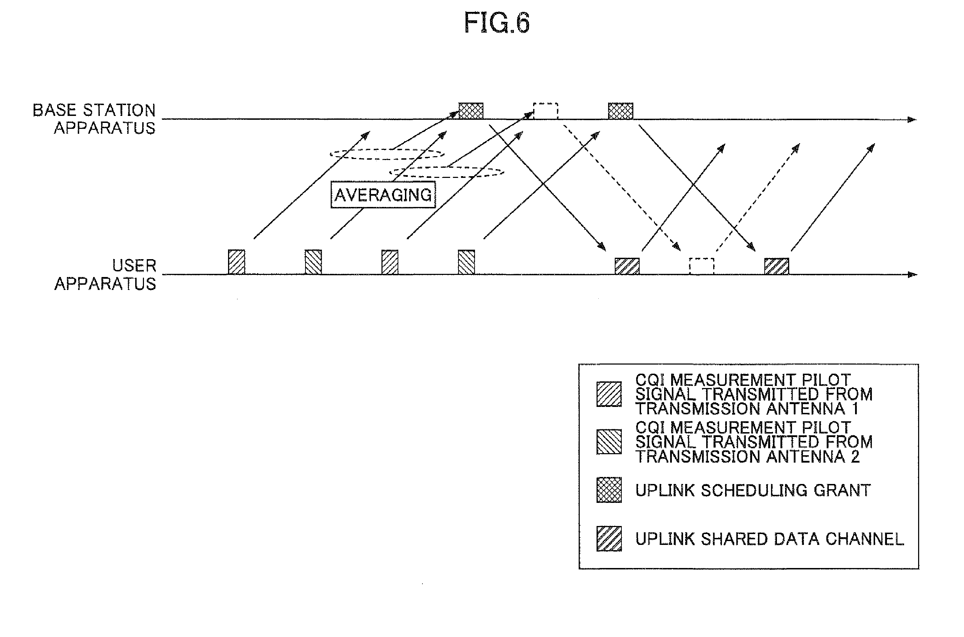

Fig. 5 schematically shows a case in which a reference signal (CQI measurement pilot signal) and a data signal are transmitted from each transmission antenna in the case when the user apparatus is provided with two transmission antennas. The reference signal and the data signal are transmitted alternately from each transmission antenna. For example, the first half of the subframe of 1 ms may be transmitted using the transmission antenna #1, and the latter half of the subframe may be transmitted using the transmission antenna #2. As shown in Fig. 6, the base station apparatus (eNB: eNodeB) measures reception quality (CQI, for example) of the reference signal transmitted from each antenna, so that an antenna for transmission is selected based on the measured reception quality of the reference signal, and the result is fed back to the assigned user apparatus by the uplink scheduling grant.

### DISCLOSURE OF THE INVENTION

### PROBLEM TO BE SOLVED-BY THE INVENTION

However, the above-mentioned background art includes the following problem.

When the open loop-based antenna switching transmit diversity is applied to the uplink, the user apparatus transmits the CQI measurement signal by switching a plurality of transmission antennas. Thus, the reception quality obtained by the base station apparatus becomes an average value of reception qualities that are obtained based on CQI measurement signals transmitted from a plurality of transmission antennas. Therefore, decline due to fading can be solved, but, gain is decreased due to averaging even when the fading is good.

In the case when scheduling is applied among uplink users in E-UTRA, assignment is performed starting from a user, among a plurality of users, in which instantaneous gain is the largest. Therefore, if the open loop - based antenna switching transmit diversity and frequency scheduling are combined, there is a case in which communication quality is deteriorated in the open-loop - based antenna switching transmit diversity compared to single antenna transmission. As a result, the effect for performing scheduling becomes small. For example, even when reception quality of a CQI measurement signal transmitted from a transmission antenna is good, if reception quality of a CQI measurement signal transmitted from another transmission antenna is bad, reception quality is regarded to be bad, so that there is a case in which assignment cannot be performed.

The present invention is contrived for solving the above-mentioned problem in the background art, and an object of the present invention is to provide a base station apparatus, a user apparatus and a communication control method that can improve transmission antenna diversity gain and improve reception quality by performing diversity among users even when the open loop-based antenna switching transmit diversity and the frequency scheduling are combined in a mobile communication system to which transmission diversity is applied.

### MEANS FOR SOLVING THE PROBLEM

For solving the problem, the base station apparatus is a base station apparatus in a radio communication system to which transmission diversity is applied in uplink,
wherein the user apparatus is provided with a plurality of antennas, and transmits a reference signal in the uplink by switching the plurality of antennas, and the plurality of antennas are associated with subframes transmitted in the uplink, the base station apparatus including:
a reception level storing unit configured to store a measured reception level of the reference signal for each antenna of each user apparatus; and
a scheduler configured to perform, based on the reception level of the reference signal transmitted for each antenna of each user apparatus stored in the reception level storing unit, scheduling for determining a user apparatus to be assigned to a subframe associated with the antenna.

The user apparatus of the present invention is a user apparatus in a radio communication system to which transmission diversity is applied in uplink,
wherein the user apparatus is provided with a plurality of antennas, and transmits a reference signal in the uplink by switching the plurality of antennas,
a base station apparatus performs scheduling for determining user apparatuses to be assigned to subframes associated with the plurality of antennas, the user apparatus including:
a mapping unit configured to map transmission data to resource units assigned for each subframe reported from the base station apparatus; and
a transmission unit configured to transmit the mapped transmission data using an antenna corresponding to the subframe.

The communication control method of the present invention is a communication control method in a radio communication system to which transmission diversity is applied in uplink, including:
a reference signal transmission step in which a user apparatus that is provided with a plurality of antennas transmits a reference signal in the uplink by switching the plurality of antennas,
a reception level storing step in which a base station apparatus stores a measured reception level of the reference signal for each antenna of each user apparatus; and
a scheduling step in which the base station apparatus performs, based on the reception level of the reference signal transmitted for each antenna of each user apparatus stored in the reception level storing step, scheduling for determining a user apparatus to be assigned to a subframe associated with the antenna.

### EFFECT OF THE INVENTION

According to the disclosed base station apparatus, the user apparatus and the communication control method, transmission antenna diversity gain can be improved and reception quality can be improved by diversity among users even when the open loop-based antenna switching transmit diversity method and the frequency scheduling are combined in a mobile communication system to which transmission diversity is applied.

### BRIEF DESCRIPTION OF THE DRAWINGS

Fig. 1 is a schematic diagram showing closed loop - based antenna switching transmit diversity;
Fig. 2 is a schematic diagram showing a case in which two antennas are switched properly;
Fig. 3 is a flow diagram showing communication between a user apparatus and a base station apparatus in the case when the closed loop - based antenna switching transmit diversity is applied;
Fig. 4 is a schematic diagram showing open loop - based antenna switching transmit diversity;
Fig. 5 is a schematic diagram showing a case in which two antennas are switched properly;
Fig. 6 is a flow diagram showing communication between a user apparatus and a base station apparatus in the case when the open loop based antenna switching transmit diversity is applied;
Fig. 7 is a block diagram showing a radio communication system according to an embodiment;
Fig. 8 is a schematic diagram showing an example of uplink mapping;
Fig. 9 is a schematic diagram showing correspondence between subframe numbers and transmission antenna numbers;
Fig. 10 is a partial block diagram showing the base station apparatus according to an embodiment;
Fig. 11 is a partial block diagram showing the user apparatus according to an embodiment;
Fig. 12 is a flow diagram showing a communication control method according to an embodiment; and
Fig. 13 is a partial block diagram showing the base station apparatus according to an embodiment.

### DESCRIPTION OF REFERENCE SIGNS

50 cell
100ₙ (100₁, 100₂, 100₃, ··· 100ₙ) user apparatus
102_{M} (102₁, 102₂, 102₃, ··· 102_{M}) transmission antenna 104 transmission antenna switching unit
106 RF transmission circuit
108 transmission antenna determination unit
200 base station apparatus
202 scheduler
204ₙ (204₁, 204₂, 204₃, ···204ₙ) CQI input unit
206ₙ (206₁, 206₂, 206₃, ···206ₙ) CQI information switching unit
208_{nM} (208ₙ₁, 208ₙ₂, 208ₙ₃, ···208_{nM}) CQI information storing unit
210 transmission control unit
212 downlink control signal generation unit
300 access gateway apparatus
400 core network
1000 radio communication system

### PREFERRED EMBODIMENTS FOR CARRYING OUT THE INVENTION

In the following, preferred embodiments of the present invention are described with reference to figures based on the following embodiments.

In all of the figures for explaining embodiments, the same reference symbols are used for parts having the same function, and repeated descriptions are not given.

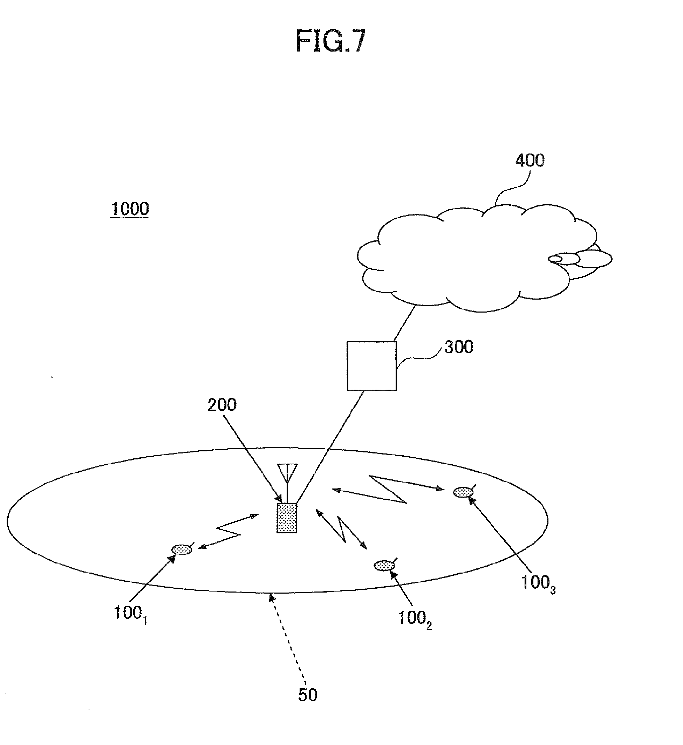

A mobile communication system to which the base station apparatus of the present embodiment is applied is described with reference to Fig. 7.

The radio communication system 1000 is a system to which Evolved UTRA and UTRAN (Another name: LTE (Long Term Evolution), or Super 3G) is applied, for example. The radio communication system 1000 includes a base station apparatus (eNB: eNode B) 200 and a plurality of user apparatuses (UE:User Equipment) 100ₙ (100₁, 100₂, 100₃, ···100ₙ, n is an integer of n>0). The base station apparatus 200 is connected to an upper station, that is, an access gateway apparatus 300, for example, and the access gateway apparatus 300 is connected to a core network 400. The user apparatus 100ₙ communicates with the base station apparatus 200 by Evolved UTRA and UTRAN in a cell 50.

In the following, since the user apparatuses 100ₙ (100₁, 100₂, 100₃, ···100ₙ) have the same configurations, functions and states, a user apparatus 100ₙ is described unless otherwise mentioned.

As radio access schemes, the radio communication system 1000 uses OFDM (orthogonal frequency division multiplexing) in the downlink, and uses SC-FDMA (single carrier - frequency division multiple access) in the uplink. As mentioned above, OFDM is a scheme in which a frequency band is divided into a plurality of narrow frequency bands (subcarriers) so that transmission is performed by mapping data on each subcarrier. SC-FDMA is a transmission scheme that can decrease interference among terminals by dividing a frequency band for each terminal and by using different frequency bands with each other by a plurality of terminals for transmission.

In the following, communication channels in the Evolved UTRA and UTRAN are described.

In the downlink, the physical downlink shared channel (PDSCH) shared by each user apparatus 100ₙ and the downlink control channel for LTE are used. In the downlink, the downlink control channel for LTE reports information of user apparatuses and information of transport format that are mapped to the physical downlink shared channel, information of user apparatuses and information of transport format that are mapped to the physical uplink shared channel, acknowledgement information of the physical uplink shared channel and the like. User data is transmitted by the physical downlink shared channel.

In the downlink, the base station apparatus 200 transmits a synchronization signal for the user apparatus 100ₙ to perform cell search.

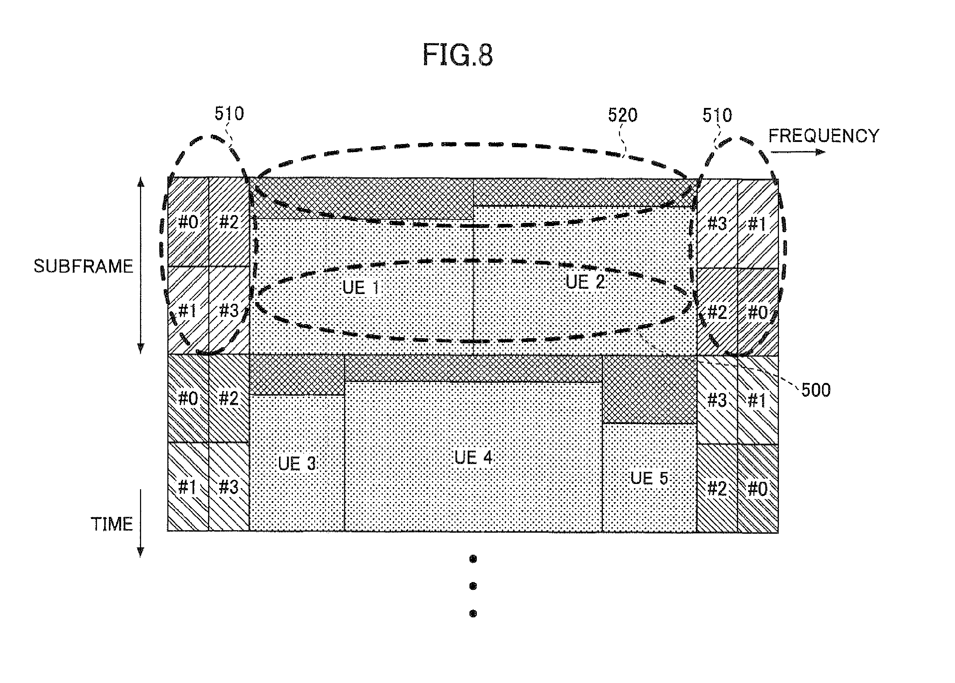

In the uplink, a physical uplink shared channel (PUSCH) shared and used by each user apparatus 100ₙ, and an uplink control channel for LTE are used. There are two types of uplink control channels that are a channel to be time-multiplexed to the physical uplink shared channel, and a channel to be frequency-multiplexed to the physical uplink shared channel. In the uplink, the uplink control channel for LTE transmits downlink quality information (CQI: Channel Quality Indicator) used for scheduling and AMC (Adaptive Modulation and Coding) for the downlink physical shared channel, and transmits acknowledgement information (HARQ ACK information) of the downlink physical shared channel. The uplink channel indicates the physical uplink shared channel and the uplink control channel for LTE. There are two types of uplink control channels for LTE that are a channel to be time-multiplexed to the physical uplink shared channel and a channel to be frequency-multiplexed to the physical uplink shared channel. Fig. 8 shows a mapping example of the uplink control channel for LTE.

As shown in Fig. 8, frequency-multiplexed uplink control channels are mapped to different positions respectively between two subframes in subframes (frequency hopping is performed). In Fig. 8, 500 indicates the physical uplink shared channel, 510 indicates the uplink control channel that is frequency-multiplexed to the physical uplink shared channel, and 520 indicates the uplink control channel that is time-multiplexed to the physical uplink shared channel.

In the uplink, the uplink control channel for LTE transmits downlink quality information (CQI: Channel Quality Indicator) used for scheduling and AMCS (Adaptive Modulation and Coding Scheme) for the downlink shared channel, and transmits acknowledgement information (HARQ ACK information) of the downlink physical shared channel. User data is transmitted by the physical uplink shared channel.

The transport channel mapped to the physical uplink shared channel is the uplink shared channel (UL-SCH). That is, the user data is mapped to the UL-SCH.

In addition to CQI and acknowledgement information, the physical uplink control channel may transmit a scheduling request for requesting resource assignment in the uplink shared channel, a resource request in persistent scheduling, and the like. Resource assignment in the uplink shared channel means that the base station apparatus reports, using the physical downlink control channel in a subframe, to the user apparatus, information indicating that communication can be performed by using the uplink shared channel in the following subframe.

In the radio communication system in the present embodiment, a transmission antenna number to be used by the user apparatus 100ₙ in the uplink is implicitly specified by a subframe number in which the base station apparatus 200 performs scheduling. That is, a subframe number is associated with a transmission antenna from which the subframe is transmitted beforehand. The correspondence between the subframe number and the transmission antenna is determined beforehand between the base station apparatus and the user apparatus by using a higher layer control signal. More particularly, before starting communication, the base station apparatus 200 may transmit a L2/L3 control signal to report the information to the user apparatus.

In the following, correspondence between the subframe number and the transmission antenna is described.

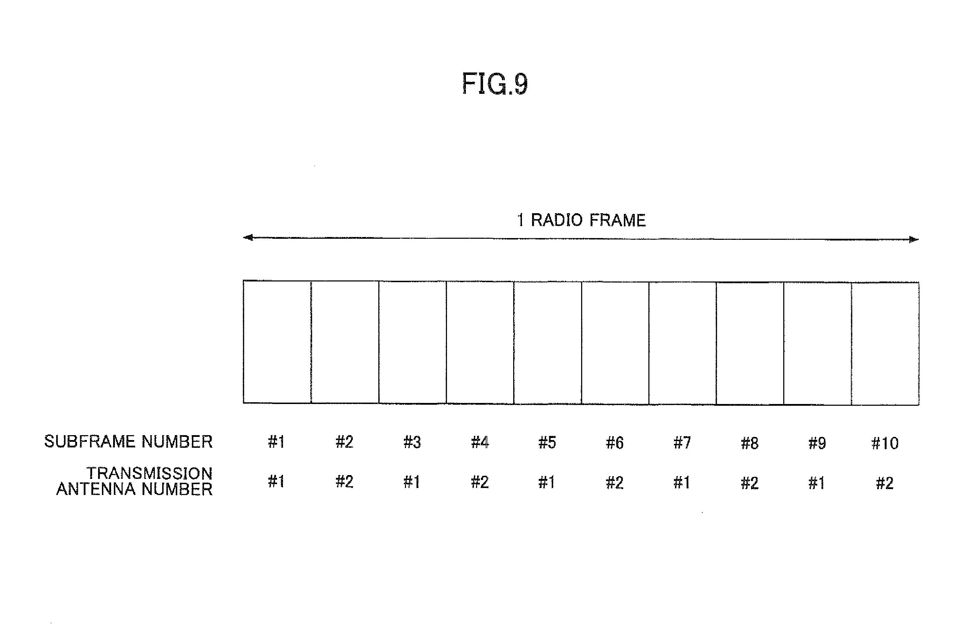

For example, the user apparatus 100ₙ includes M transmission antennas wherein M is an integer of M>0. In this case, the transmission antenna number is set to be "subframe number % M", that is, set to be a value which is a remainder of the subframe number divided by M, wherein the transmission antenna number is M if the subframe number % M = 0. For example, as shown in Fig. 9 in the case when the user apparatus 100ₙ includes two antennas, if the subframe number is an odd number, the user apparatus 100ₙ transmits the uplink shared channel using the transmission antenna #1. On the other hand, if the subframe number is an even number, the user apparatus 100ₙ transmits the uplink shared channel using the transmission antenna #2.

Alternatively, in the case when the user apparatus 100ₙ includes a plurality of RF circuits, combinations between subframe numbers and transmission antenna numbers may be determined beforehand, so that a combination of transmission antennas can be set based on the combinations. For example, in the case when the user apparatus 100ₙ includes three transmission antennas and two RF circuits, the user apparatus 100ₙ can be set such that, if the value of "subframe number % 3" is 0, antennas 1 and 2 are selected, if the value of "subframe number % 3" is 1, antennas 1 and 3 are selected, and if the value of "subframe number % 3" is 2, antennas 2 and 3 are selected. These are merely examples, and different combinations can be used. In general, in the case when the user apparatus 100ₙ includes M transmission antennas and N RF devices (circuits), the user apparatus 100ₙ can be set to control the combination of N transmission antennas based on the value of "subframe number % _{M}C_{N}", wherein "_{M}C_{N}" indicates a total number of combinations for selecting different N things from M things (M and N are nonnegative integers of N<=M).

In addition, for example, if the gain of the reference signal transmitted by the transmission antenna #1 of the user apparatus 100ₙ is higher, the base station apparatus 200 may perform scheduling in an odd subframe number, and if the gain of the reference signal transmitted by the transmission antenna #2 of the user apparatus 100ₙ is higher, the base station apparatus 200 may perform scheduling in an even subframe number. In this case, when scheduling is performed in the odd subframe number, the user apparatus 100ₙ performs transmission from the transmission antenna #1, and when scheduling is performed in the even subframe number, the user apparatus 100ₙ performs transmission from the transmission antenna #2.

In addition, in the case when the user apparatus 100ₙ includes a plurality of RF circuits, the base station apparatus 200 may perform scheduling in a subframe number in which gain is high based on gain of the reference signal transmitted in each subframe number. In this case, the user apparatus 100ₙ controls combinations of N transmission antennas based on the value of "subframe number % _{M}C_{N}" based on the subframe number.

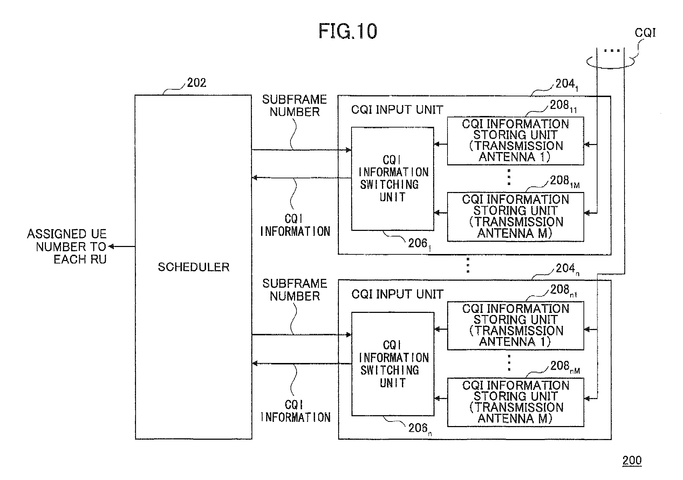

The base station apparatus 200 of the present embodiment is described with reference to Fig. 10. The base station apparatus 200 of the present embodiment includes a scheduler 202, a CQI input unit 204ₙ (204₁, 204₂, 204₃, ···204ₙ, n is an integer of n>0). The CQI input unit 204ₙ is provided for each user apparatus 100ₙ. The CQI input unit 204ₙ includes a CQI information switching unit 206ₙ (n is an integer of n>0) and a CQI information storing unit 208_{nM} (208ₙ₁, 208ₙ₂, 208ₙ₃, ···208_{nM}, n is an integer of n>0, and M is an integer of M>0). The CQI information storing unit 208_{nM} is provided for each antenna of the user apparatus 100ₙ.

The user apparatus 100ₙ that communicates with the base station apparatus 200 of the present embodiment is provided with M antennas (M is an integer of M>0), for example. The user apparatus 100ₙ transmits the CQI measurement pilot signal from each antenna. The base station apparatus 200 measures quality (CQI, for example) of the CQI measurement pilot signal transmitted from the user apparatus 100ₙ, and the reception quality is input to the CQI information storing unit 208_{nM} corresponding to each transmission antenna of the CQI input unit 204ₙ corresponding to the user apparatus 100ₙ.

The CQI information storing unit 208_{nM} supplies the reception quality of the input CQI measurement pilot signal to the CQI information switching unit 206ₙ.

The scheduler 202 supplies a subframe number that is a subject for scheduling to the CQI information switching unit 206₁-206ₙ. Based on the supplied subframe number, the CQI information switching unit 206₁-206ₙ obtains a transmission antenna number corresponding to the subframe number. Then, among reception qualities supplied by the CQI information storing unit 208_{nM}, the CQI information switching unit 206₁-206ₙ supplies, to the scheduler 202, reception quality measured by a CQI measurement pilot signal transmitted from a transmission antenna corresponding to the transmission antenna number.

For example, a case in which the number of antennas of the user apparatus 100ₙ is two is described. For example, it is determined beforehand that, when the subframe number is an odd number, the user apparatus 100ₙ transmits the uplink shared channel using the transmission antenna #1, and that when the subframe number is an even number, the user apparatus 100ₙ transmits the uplink shared channel using the transmission antenna #2. In this case, when the subframe number supplied from the scheduler 202 is an odd number, the CQI information switching unit 206ₙ supplies, to the scheduler 202, reception quality measured by a CQI measurement pilot signal transmitted from the transmission antenna #1. When the subframe number supplied from the scheduler 202 is an even number, the CQI information switching unit 206ₙ supplies, to the scheduler 202, reception quality measured by a CQI measurement pilot signal transmitted from the transmission antenna #2.

In the subframe, based on the input reception quality, the scheduler 202 performs assignment starting from a user apparatus of good reception quality among user apparatuses 100₁-100ₙ. The scheduler performs frequency scheduling for assigning user apparatuses to each resource unit, and outputs identifiers (UE numbers) of user apparatuses assigned to each resource unit. Then, the resource unit number is reported to the assigned user apparatus. The resource unit is a smallest unit of time/frequency resources. In the SC-FDMA, each user apparatus in a cell performs transmission using different time/frequency resources. Accordingly, orthogonality among user apparatuses in a cell is realized.

In addition, when the user apparatus 100ₙ includes a plurality of RF circuits, the base station apparatus 200 may perform scheduling based on reception quality measured by the CQI measurement pilot signal transmitted at each subframe number.
In this case, as mentioned above, the user apparatus 100ₙ controls the combinations of the N transmission antennas based on the value of "subframe number % _{M}C_{N}".

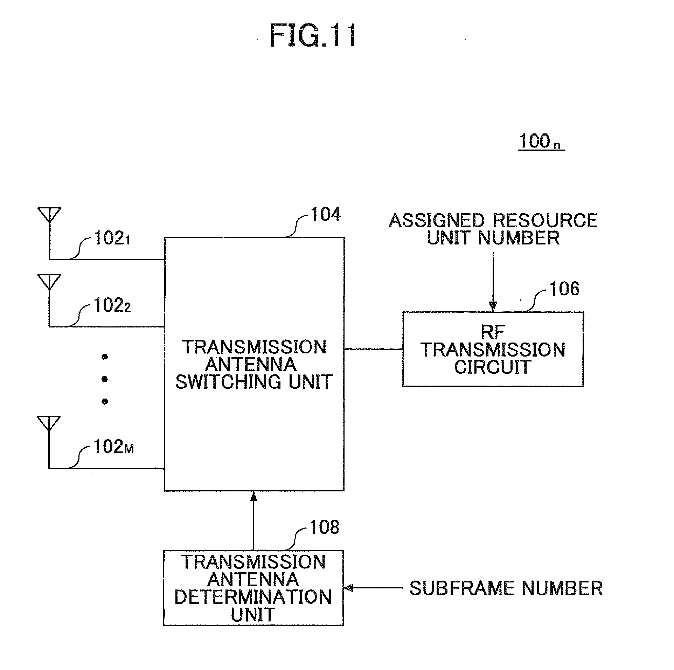

The user apparatus 100ₙ of the present embodiment is described with reference to Fig. 11.

The user apparatus 100ₙ of the present embodiment includes transmission antennas 102₁-102_{M}, a transmission antenna switching unit 104, an RF transmission circuit 106 as a mapping unit, and a transmission antenna determination unit 108.

The resource unit number transmitted by the base station apparatus 200 is input to the RF transmission circuit 106.

The transmission antenna determination unit 108 determines a transmission antenna based on the subframe number.

For example, a case in which the user apparatus 100ₙ is provided with two antennas is described. For example, it is determined beforehand that, when the subframe number is an odd number, the user apparatus 100ₙ transmits the uplink shared channel using the transmission antenna #1, and that, when the subframe number is an even number, the user apparatus 100ₙ transmits the uplink shared channel using the transmission antenna #2. In this case, the transmission antenna determination unit 108 determines to transmit the channel from the transmission antenna #1 when the subframe number is an odd number, and determines to transmit the channel from the transmission antenna #2 when the subframe number is an even number. The transmission antenna determination unit 108 supplies information indicating the determined transmission antenna to the transmission antenna switching unit 104.

The transmission antenna switching unit 104 switches to the transmission antenna for transmission of the uplink shared channel based on the supplied information that indicates the transmission antenna.

The RF transmission circuit 106 maps transmission data to a resource unit corresponding to the input resource unit number, and transmits the uplink shared channel using the transmission antenna switched by the transmission antenna switching unit 104.

In addition, as mentioned above, in the case when the user apparatus 100ₙ includes a plurality of RF circuits, combinations of subframe numbers and transmission antenna numbers may be determined beforehand, so that a combination of transmission antennas may be set based on the information.

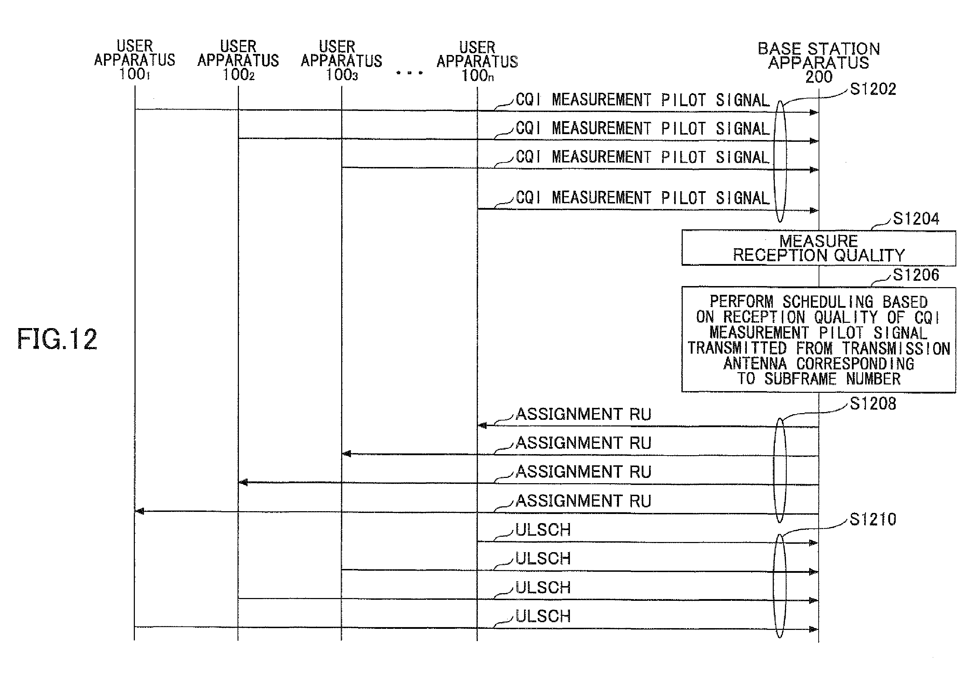

In the following, a transmission control method of the present embodiment is described with reference to Fig. 12.

Each of the user apparatuses 100₁-100ₙ transmits a CQI measurement pilot signal (step S1202).

The base station apparatus 200 measures reception quality (CQI, for example) of the CQI measurement pilot signal transmitted by each user apparatus (step S1204).

The scheduler 202 of the base station apparatus 200 performs scheduling based on the reception quality of the CQI measurement pilot signal transmitted from the transmission antenna corresponding to the subframe number in which scheduling is performed (step S1206).

As a result of the scheduling, the base station apparatus 200 reports the number of resource unit assigned to the user apparatus of an assignment subject (step S1208). For example, the number is included in the uplink scheduling grant, and transmitted.

When the number of the resource unit assigned by the base station apparatus 200 is reported, the user apparatus 100₁-100ₙ transmits the uplink shared channel using the resource unit (step S1210).

In the above-mentioned embodiment, instead of performing scheduling for every user apparatus in each subframe, the base station apparatus 200 may perform scheduling for user apparatuses in which reception quality of the CQI measurement pilot signal transmitted from a transmission antenna corresponding to the subframe is better than reception quality of the CQI measurement pilot signal transmitted from another transmission antenna. In this case, the CQI information switching unit 206ₙ supplies CQI information to the scheduler 202 when receiving a subframe number corresponding to a transmission antenna from which a CQI measurement pilot signal of good quality is transmitted. In each subframe, the scheduler 202 performs scheduling for user apparatuses in which reception quality of the CQI measurement pilot signal transmitted from a transmission antenna corresponding to the subframe is better than reception quality of the CQI measurement pilot signal transmitted from another transmission antenna.

For example, in the case when the gain of the CQI measurement pilot signal transmitted from the transmission antenna #1 of the user apparatus 100ₙ is higher, the base station apparatus 200 performs scheduling only when the subframe number is an odd number. In the case when the gain of the CQI measurement pilot signal transmitted from the transmission antenna #2 of the user apparatus 100ₙ is higher, the base station apparatus 200 performs scheduling only when the subframe number is an even number.

As a result, the user apparatus 100ₙ performs transmission from the transmission antenna #1 when scheduling is performed in the odd subframe number, and the user apparatus 100ₙ performs transmission from the transmission antenna #2 when scheduling is performed in the even subframe number. Accordingly, a transmission antenna of good reception quality can be selected constantly.

In addition, also when the user apparatus 100ₙ includes a plurality of RF circuits, combinations of subframe numbers and transmission antenna numbers are determined beforehand, a combination of transmission antennas is set based on the information, and scheduling is performed in a subframe number corresponding to high gain, so that a transmission antenna of good reception quality can be selected constantly.

Next, a radio communication system of another embodiment is described.

The configuration of the radio communication system of the present embodiment is similar to that described with reference to Fig. 7. The configurations of the base station apparatus and the user apparatus are similar to those described with reference to Figs. 10 and 11.

In the radio communication system of the present embodiment, similarly to the above-mentioned embodiment, the user apparatus 100ₙ includes M transmission antennas. The base station apparatus 200 sets the transmission antenna number to be the value of "subframe number % M (the value is M when the subframe number % M =0).

Further, when reception quality of the CQI measurement pilot signal transmitted from a transmission antenna of the user apparatus 100ₙ is higher than reception quality of the CQI measurement pilot signal transmitted by other transmission antennas, the base station apparatus 200, in the scheduling unit 202, performs assignment preferentially for the subframe corresponding to the transmission antenna. That is, the base station apparatus 200 preferentially performs assignment for the subframe corresponding to the transmission antenna that has transmitted the CQI measurement pilot signal in which the reception quality is the best. However, when there is further transmission data, the base station apparatus 200 performs assignment for subframes corresponding to transmission antennas that has transmitted the CQI measurement pilot signal, in descending order of reception quality starting from a subframe corresponding to a transmission antenna of good reception quality among reception qualities of the CQI measurement pilot signal transmitted by the other transmission antennas.

More particularly, when the transmission antenna that has transmitted the CQI measurement pilot signal of the best reception quality is the transmission antenna #1, assignment is preferentially performed for subframes corresponding to "subframe number % M = 1". However, when the amount of data that should be transmitted is large, scheduling is not only performed for the subframe corresponding to the "subframe number % M = 1", but also performed supplementarily for a transmission antenna that has transmitted the CQI measurement pilot signal of the second best reception quality, and assignment is performed. For example, when the transmission antenna that has transmitted the CQI measurement pilot signal of the second best reception quality is the transmission antenna #2, scheduling is performed supplementarily also for the subframe corresponding to the "subframe number % M = 2", and assignment is performed.

When required delay time cannot be satisfied, scheduling may be performed not only for the subframe corresponding to "subframe number % M = 1", but also for the subframe corresponding to "subframe number % M = 2" supplementarily, to perform assignment.

Further, if transmission opportunity is not enough even though scheduling is performed supplementarily for the subframe corresponding to "subframes number % M =2" for assignment, scheduling is performed supplementarily also for a transmission antenna that has transmitted the CQI measurement pilot signal of the third best reception quality. For example, when the transmission antenna that has transmitted the CQI measurement pilot signal of the third best reception quality is the transmission antenna #3, scheduling is performed supplementarily also for the subframe corresponding to "subframe number % M = ".

That is, subframes are assigned starting from a subframe corresponding to a transmission antenna that has transmitted the CQI measurement pilot signal of good reception quality in descending order of reception quality.

By configuring the system as mentioned above, the transmission opportunity can be increased, so that data transmission delay can be decreased compared to the above-mentioned embodiment. In addition, diversity effect can be obtained according to the data transmission amount.

Next, a radio communication system of another embodiment is described.

The configuration of the radio communication system of the present embodiment is similar to that described with reference to Fig. 7. The configuration of the user apparatus is similar to that described with reference to Fig. 11.

The radio communication system of the present embodiment is configured, in the above-mentioned embodiment, such that the above-mentioned open-loop control and the single antenna transmission are switched based on control of the upper layer.

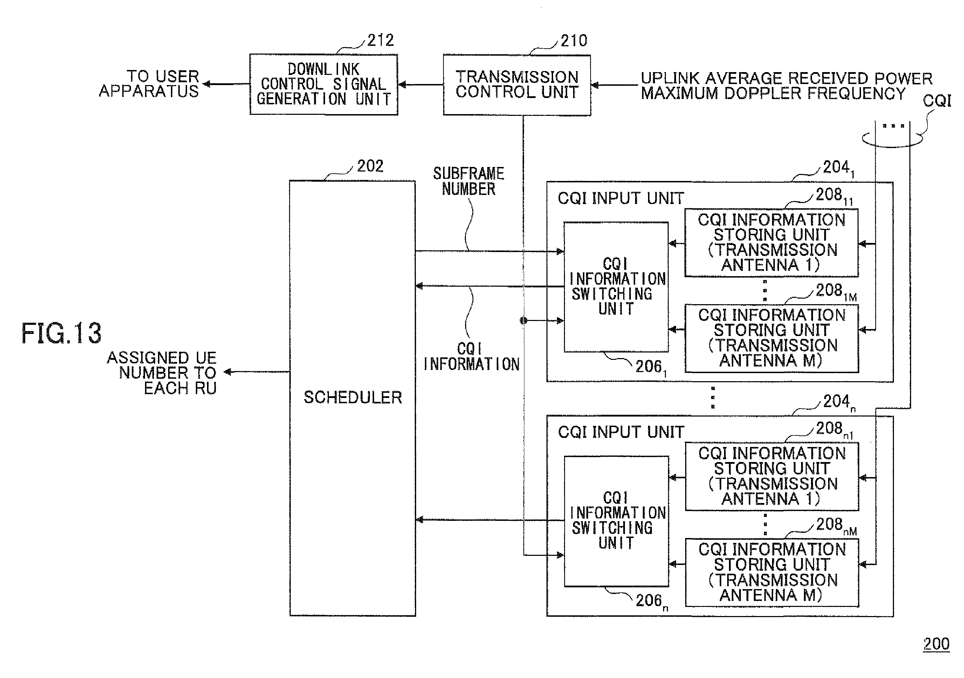

The base station apparatus 200 of the present embodiment is described with reference to Fig. 13.

The base station apparatus 200 of the present embodiment is provided with a transmission control unit 210 as a transmission diversity apply determination unit and a downlink control signal generation unit 212 as a reporting unit.

The transmission control unit 210 receives an uplink average received power and a maximum Doppler frequency. The transmission control unit 210 determines whether to perform open loop control or the single antenna transmission based on the received uplink average received power and / or the maximum Doppler frequency. For example, based on the uplink average received power, when the uplink average received power is high so that reception quality is good, the transmission control unit 210 determines to apply the single antenna transmission. When the uplink average received power is low so that reception quality is bad, the transmission control unit 210 determines to apply the open loop control. More particularly, when the uplink average received power is equal to or greater than a predetermined threshold, it is determined to apply the single antenna transmission, and when the uplink average received power is less than the predetermined threshold, it is determined to perform open loop control. In addition, based on the maximum Doppler frequency, when it is determined that the maximum Doppler frequency is high and that the user apparatus 100ₙ is moving at high speed, the transmission control unit 210 determines to apply single antenna transmission. When it is determined that the maximum Doppler frequency is low so that the user apparatus 100ₙ is moving at low speed, the transmission control unit 210 determines to apply open loop control. More particularly, when the maximum Doppler frequency is equal to or greater than a predetermined threshold, it is determined to apply the single antenna transmission, and when the maximum Doppler frequency is less than the predetermined threshold, it is determined to perform open loop control. The transmission control unit 210 supplies determination result indicating whether to apply open loop control or single antenna transmission to the downlink control signal generation unit 212 and the CQI information switching unit 206₁-206ₙ.

Based on the supplied determination result, when the open loop control is applied, the CQI information switching unit 206₁-206ₙ performs processing similar to the above-mentioned embodiment. Based on the supplied determination result, when the single antenna transmission is applied, the CQI information switching unit 206₁-206ₙ supplies, to the scheduler 202, CQI information corresponding to a transmission antenna that is predetermined as an antenna for performing the signal antenna transmission.

The downlink control signal generation unit 212 reports the supplied determination result to the user apparatus 100ₙ. For example, the downlink control signal generation unit 212 may report the determination result as L2/L3 control information.

According to the present embodiment, highly flexible scheduling can be preferentially performed by using the single antenna transmission in an environment in which adequate reception quality is obtained. In the flexibility, low delay is included. In addition, by performing the single antenna transmission, assignment can be performed over a plurality of subframes consecutively, the time variation of interference for other users can be reduced.

According to the present embodiment, the base station apparatus can cause the user apparatus to use a transmission antenna of higher gain for uplink transmission without adding/changing information for the physical downlink control channel. In addition, when scheduling is applied, gain by transmission antenna diversity, and reception quality by diversity among users can be improved.

In the above-mentioned embodiment, although examples are described for a system to which Evolved UTRA and UTRAN (another name: Long Term Evolution, or Super 3G) is applied, the user apparatus and the radio communication system of the present invention can be applied to radio communication systems to which uplink antenna switching diversity is applied. Also, the present invention can be applied not only to the user apparatus having a single RF circuit but also to a user apparatus having RF circuits the number of which is less than the number of transmission antennas.

For the sake of convenience of explanation, while specific numerical value examples are used to facilitate understanding of the present invention, such numerical values are merely examples, so that any appropriate value may be used unless specified otherwise.

While the present invention is described with reference to specific embodiments, the respective embodiments are merely exemplary, so that a skilled person will understand variations, modifications, alternatives, and replacements and the like. For convenience of explanation, while the apparatus according to the embodiments of the present invention is explained using functional block diagrams, such an apparatus as described above may be implemented in hardware, software, or a combination thereof. The present invention is not limited to the above embodiments, so that variations, modifications, alternatives, and replacements are included in the present invention without departing from the spirit of the present invention.

The present international application claims priority based on Japanese patent application No.2007-252474, filed in the JPO on September 27, 2007 and the entire contents of the Japanese patent application No.2007-252474 are incorporated herein by reference.

## Claims

1. A base station apparatus in a radio communication system to which transmission diversity is applied in uplink,
wherein the user apparatus is provided with a plurality of antennas, and transmits a reference signal in the uplink by switching the plurality of antennas, and the plurality of antennas are associated with subframes transmitted in the uplink, the base station apparatus comprising:
a reception level storing unit configured to store a measured reception level of the reference signal for each antenna of each user apparatus; and
a scheduler configured to perform, based on the reception level of the reference signal transmitted for each antenna of each user apparatus stored in the reception level storing unit, scheduling for determining a user apparatus to be assigned to a subframe associated with the antenna.

2. The base station apparatus as claimed in claim 1, wherein, when scheduling is performed for a subframe corresponding to an antenna that corresponds to the best reception level among reception levels of the reference signal transmitted by each antenna, the reception level storing unit supplies the reception level to the scheduler, and
the scheduler determines the user apparatus to be assigned to the subframe based on the reception level supplied by the reception level storing unit.

3. The base station apparatus as claimed in claim 1 or 2, comprising:
a transmission diversity apply determination unit configured to determine whether to apply the transmission diversity based on uplink average received power and/or maximum Doppler frequency; and
a reporting unit configured to report the determination result to the user apparatus.

4. A user apparatus in a radio communication system to which transmission diversity is applied in uplink,
wherein the user apparatus is provided with a plurality of antennas, and transmits a reference signal in the uplink by switching the plurality of antennas,
a base station apparatus performs scheduling for determining user apparatuses to be assigned to subframes associated with the plurality of antennas, the user apparatus comprising:
a mapping unit configured to map transmission data to resource units assigned for each subframe reported from the base station apparatus; and
a transmission unit configured to transmit the mapped transmission data using an antenna corresponding to the subframe.

5. A communication control method in a radio communication system to which transmission diversity is applied in uplink, comprising:
a reference signal transmission step in which a user apparatus that is provided with a plurality of antennas transmits a reference signal in the uplink by switching the plurality of antennas,
a reception level storing step in which a base station apparatus stores a measured reception level of the reference signal for each antenna of each user apparatus; and
a scheduling step in which the base station apparatus performs, based on the reception level of the reference signal transmitted for each antenna of each user apparatus stored in the reception level storing step, scheduling for determining a user apparatus to be assigned to a subframe associated with the antenna.
